# EUROPEAN PATENT SPECIFICATION

(11) **EP 3 894 758 B1**
(45) Date of publication and mention of the grant of the patent: **13.09.2023**
(21) Application number: 19813536.0
(22) Date of filing: 04.12.2019
(51) Int. Cl.: F24F 13/28, F24F 3/16, B01D 46/00, B01D 45/16, F24F 7/06, F24F 7/007, F24F 8/108, F24F 8/158

(54) **AIR PURIFIER**
LUFTREINIGER
PURIFICATEUR D'AIR

(30) Priority: 12.12.2018 EP 18211924
(43) Date of publication of application: 20.10.2021
(73) Proprietor: Blueair AB, 115 26 Stockholm (SE)
(72) Inventor: HADDING DELIN, Lars Johan Wilhelm, 117 50 Stockholm (SE); DUNBERGER, Lars Henrik, 115 26 Stockholm (SE); SACK, Stefan, 12834 Stockholm (SE)
(74) Representative: Newbould, Frazer Anthony
(86) International application number: PCT/EP2019/083726
(87) International publication number: WO 2020/120263

(56) References cited:
- EP-A1- 2 711 643
- CN-U- 205 372 827
- JP-A- H11 182 918
- JP-U- S5 417 507
- US-A1- 2005 039 600
- US-A1- 2006 191 415

## Description

The present invention relates to an improvement in air purifying systems.

EP 2 711 643 discloses an air purification apparatus. The air purification apparatus comprising: a casing which contains at least one apparatus air inlet and at least one apparatus air outlet; at least one main filter which is being installed at the apparatus air inlet and/or within the casing; at the periphery of the main filter, there locates a primary air flow inlet and a secondary air flow inlet. When a primary air flow is drawn to flow from the upstream to the downstream positions inside the casing, the primary air flow is adapted to pass by at least one edge of the exterior of the main filter, resulting at least two exterior surfaces of the main filter being exerted with different atmospheric pressures. Through the secondary air flow inlet, a secondary air flow is entrained through the main filter and flows from its exterior surface is exerted with higher atmospheric pressure to its exterior surface is exerted with lower atmospheric pressure. The invention offers an air purification apparatus which owns the characteristics of simple structure, able to extend the life-span of the filter cost effectively, low energy consumption and induced low noise level.

US 2006/0191415 (Johnson) discloses a device for trapping particulate matter suspended in exhaust from diesel engines and for separating gases from particles. The device comprises a spiral exhaust channel which directs particles entrained in the flow to be captured by a mesh whereas the gases are not affected by the spiral and are captured separately.

CN 205372827 (Yiming) discloses a duct-type plasma air disinfection purifier. The duct-type plasma air disinfection purifier comprises a box body, fans, a plasma generator and an anion generator, wherein the two fans are separately arranged on the side wall and the top end of the box body; the outer side of each fan is provided with a fan housing; a flow guiding sheet is connected between the two fan housings; a flow guiding channel is formed by the flow guiding sheet; the plasma generator and the anion generator are separately and fixedly arranged on the bottom end in the box body; and the electrodes of the plasma generator and the anion generator penetrate through the flow guiding sheet and are arranged in the flow guiding channel.

Despite the prior art there remains a need for further improvements to air purifying systems, in particular to stand alone air purification systems which are intended for use in the domestic environment.

Accordingly, and in a first aspect, there is provided a domestic air purifier system comprising a removable particulate filter (4), a fan (2) or impeller and which is powered by a motor, an air duct (1) through which air passes in an air flow direction and is purified, and said air duct (1) comprising a duct wall, wherein a portion of said duct wall (1) comprises a gas filter (3) and wherein the gas filter (3) comprises a duct surface and which is flush with the duct wall.

We have surprisingly found that effective removal of harmful gases can be achieved by using a gas filter disposed in an air flow direction. This is in contrast to air purifiers in the literature and on the market where the same gas filters are purposefully disposed to cross the air flow direction and so force air through them. Such designs result in an undesirable pressure drop as the air flows through the device. Pressure drops lead to increased fan speeds and increased noise, both of which are undesirable performance characteristic in the minds of the consumer. This is particularly the case when the device is to be used in a bedroom and at night where quiet yet effective performance is highly desirable.

Preferably, the gas filter comprises a resilient, or bendable material. This permits the filter to be located according to the design of the air purifying system and not to be engineered accordingly.

Preferably, the gas filter is a carbon filter such is known in the art. Preferably, it is an activated carbon filter.

The gas filter comprises a duct surface and which is flush with the duct wall. This arrangement of gas filter in the air duct improves the flow of air through the device and yet still maintains a level of acceptable performance.

Preferably, the gas filter comprises means for attachment to the duct wall. The duct wall accordingly preferably comprises means to receive the gas filter.

Suitably preferred means for attachment include lugs, slots, friction fits and snap-fit arrangements. Preferably, the gas filter comprises a substantially rigid frame for providing improved fitting means. Such a frame may constitute metal or plastic and may form a perimeter frame or a mesh type frame arrangement. More preferably, the means for attaching gas filter to the duct wall is disposed on the substantially rigid frame. In a more preferred embodiment, the gas filter is removable from said frame such that replacement of the gas filtration media can be done while maintaining use of the frame.

Preferably, the air duct is configured such that the air flow direction changes at least once during passage through the device. Where the air flow changes direction is referred to as a bend, or, where the change in direction is 45 or 90 degrees, an elbow. Changes in direction can also be created by casing and flow guides such as bends, junctions, constructions, meshes, etc. In such an embodiment, the air will be filtered while its direction is changed with low pressure drop and energy input. The device is thus more energy efficient in the context of gaseous filtration.

Systems according to the invention typically involved drawing air into the system in one direction and expelling it in another. In between, the air flow might change direction one or more times depending on the design of the system. In other words, there might be one or more bends in the air flow from the air displacement means to the particulate filter, or where the air flow exits the system.

Where there is a change in air flow direction this is usually between the fan and the particulate filter. Preferably, the gas filter is disposed where the air flow direction is changed and more preferably, the gas filter is disposed at the far wall in a bend.

Preferably, the system additionally comprises a removable particulate filter. Particulate filters are tasked with capturing particulate matter as it passes through the filter in the air flow. Preferably, the removable particulate filter is a High Efficiency Particulate Air (HEPA) filter. It is to be understood that while the filter part of an air purifier is a vital part of its function, air purifiers are not commonly manufactured with a filter in place. They are practically always manufactured separately and most importantly often by a different commercial enterprise than of the manufacturer of the air purifier itself. It is also typical for a manufacturer of filters to manufacture filters for different air purifier models made by different manufacturers. The particulate filter is to be contrasted with the pre-filter or any dust filter which is present. Pre-filters and dust filters are not considered HEPA filters as they do not have the particulate capturing capability exhibited by HEPA filters.

Preferably, the particulate filter is disposed such that air passing along the air flow direction passes through the particulate filter.

The system comprises an air displacement means. Typical air displacement means include fans and impellers. The air displacement means may be disposed at the beginning or at the end of the air flow such that the air is either pushed through the system or pulled through it. Typical fans include radial fans and axial fans. It is preferred that the device according to the invention comprises a radial fan. Radial fans are far more energy efficient than axial fans and also create an air flow which is less likely to result in turbulence when passing over the gas filters disposed along the duct walls of the system.

In such a system the air is cleaned of unwanted gases by passing over the gas filter and not necessarily through it. The surprising benefit is not just that the air can be cleansed of gases merely by passing over such a filter, rather than passing through it, but also that there is no loss in gas cleansing capability with such a system. Accordingly, the same amount of gas can be cleansed for the same energy consumption. The fan speed can be lowered and therefore less energy used to drive the air flow through the system.

Preferably, the gas filter has a porous member and is preferably comprises a foamy filter.

A preferred gas filter comprises activated carbon which is a commercially available form of carbon that has been processed to make it more porous.

Preferably, the gas filters are replaceable. However, in view of their being internally located, it is preferred that the system also comprises means for permitting appropriate access to the gas filters. Preferably, the system comprises a door or other suitable access which can be opened permitting removal and replacement of gas filters.

The system may also preferably comprise a pre-filter or dust filter at the air inlet and/or outlet. Such a filter is not a HEPA filter as it lacks the physical density to act as a filter for small particles such as PM10 and PM2.5's but they will stop dust from entering the system and also act as a poke guard preventing injury or damage to the user or the system.

Preferably, the system also comprises a sensor for sensing the concentration of particular gases in the ambient air. More preferably, the operational parameters of the system may be determined by the results obtained from the sensor. For example, if more formaldehyde is detected, the fan speed may be increased. Alternatively, an indication may be made either through a user interface or via smart phone to the consumer that the gas levels are such that modification of the operation might be beneficial. For example, the fan speed might be modified, the filters might need changing or the placement of the system in a domestic environment might be changed.

In a second aspect there is provided a method of removing unwanted gases from ambient air by passing over a gas filter in a system as described in any of claims 1 to 4. Unwanted gases include formaldehyde, nitrous oxide and volatile organic carbon moieties.

Embodiments are now described with reference to the following non-limiting drawings in which:

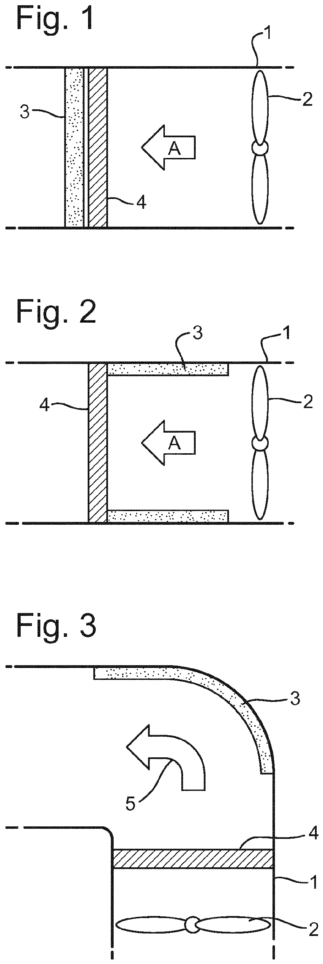

Figure 1 is a typical construction found in many commercial products. The air duct (1) defines the air flow (A) as created by the fan (2). The air passes through a particulate filter (4) and an activated carbon filter (3).
Figure 2 is an embodiment where the activated carbon filters (3) are disposed at the sides of the air duct (1) such that the air flow passes by them and not through them. The particulate filter (4) is in the same position as in Figure 1.
Figure 3 is a further embodiment and where the duct is bent (at 5) to form an elbow. The activated carbon filter (3) in this instance is only disposed on the far surface of the air duct (1) at the bend. The particulate filter (4) in this embodiment is disposed before the carbon filter (3).

## Claims

1. A domestic air purifier system comprising a removable particulate filter (4), a fan (2) or impeller and which is powered by a motor, an air duct (1) through which air passes in an air flow direction and is purified, and said air duct (1) comprising a duct wall, wherein a portion of said duct wall (1) comprises a gas filter (3), the domestic air purifier system being **characterized in that** the gas filter (3) comprises a duct surface which is flush with the duct wall.

2. A system according to claim 1 wherein the air duct (1) is configured such that the air flow direction changes at least once during passage through the device.

3. A system according to claim 2, wherein the particulate filter (4) is disposed such that air passing along the air flow direction passes through the particulate filter (4).

4. A system according to any preceding claim wherein the gas filter (3) comprises a foamed component.

5. A method of removing unwanted gases from ambient air by passing over a gas filter in a system as described in any of claims 1 to 4.

## Patentansprüche

1. Luftreinigungssystem für den häuslichen Gebrauch, das einen abnehmbaren Partikelfilter (4), ein Gebläse (2) oder ein Flügelrad, das durch einen Motor angetrieben wird, und einen Luftkanal (1), den die Luft in einer Luftströmungsrichtung passiert und in dem sie gereinigt wird, umfasst, wobei der Luftkanal (1) eine Kanalwand aufweist, wobei ein Abschnitt der Kanalwand (1) einen Gasfilter (3) aufweist,
wobei das Luftreinigungssystem für den häuslichen Gebrauch **dadurch gekennzeichnet ist, dass**
der Gasfilter (3) eine Kanaloberfläche aufweist, die mit der Kanalwand bündig ist.

2. System nach Anspruch 1, wobei der Luftkanal (1) so konfiguriert ist, dass sich die Luftströmungsrichtung während des Passierens der Vorrichtung wenigstens einmal ändert.

3. System nach Anspruch 2, wobei der Partikelfilter (4) so angeordnet ist, dass Luft, die längs der Luftströmungsrichtung geleitet wird, den Partikelfilter (4) passiert.

4. System nach einem der vorhergehenden Ansprüche, wobei der Gasfilter (3) eine aufgeschäumte Komponente umfasst.

5. Verfahren zum Entfernen unerwünschter Gase aus Umgebungsluft durch Leiten über einen Gasfilter in einem System nach einem der Ansprüche 1 bis 4.

## Revendications

1. Système de purificateur d'air domestique comprenant un filtre à particules amovible (4), une soufflante (2) ou un ventilateur et qui est alimenté par un moteur, un conduit d'air (1) à travers lequel de l'air passe dans une direction d'écoulement d'air et est purifié, et ledit conduit d'air (1) comprenant une paroi de conduit, dans lequel une portion de ladite paroi de conduit (1) comprend un filtre à gaz (3), le système de purificateur d'air domestique étant **caractérisé en ce que** le filtre à gaz (3) comprend une surface de conduit qui est rincée avec la paroi de conduit.

2. Système selon la revendication 1, dans lequel le conduit d'air (1) est configuré de sorte que la direction d'écoulement d'air change au moins une fois pendant le passage à travers le dispositif.

3. Système selon la revendication 2, dans lequel le filtre à particules (4) est disposé de sorte que l'air passant le long de la direction d'écoulement d'air passe à travers le filtre à particules (4).

4. Système selon l'une quelconque des revendications précédentes, dans lequel le filtre à gaz (3) comprend un composant expansé.

5. Procédé d'élimination de gaz non souhaités d'air ambiant par passage sur un filtre à gaz dans un système comme décrit dans l'une quelconque des revendications 1 à 4.
